# EUROPÄISCHE PATENTANMELDUNG

(11) **EP 2 177 139 A1**
(43) Veröffentlichungstag der Anmeldung: **21.04.2010**
(21) Anmeldenummer: 09011134.5
(22) Anmeldetag: 31.08.2009
(51) Int. Cl.: A47J 37/10

(54) **Grillpfanne**

(30) Priorität: 20.10.2008 DE 202008013878 U
(71) Anmelder: Sasu, Michael, 60320 Frankfurt/Main (DE)
(72) Erfinder: Sasu, Michael, 60320 Frankfurt/Main (DE)
(74) Vertreter: Schubert, Siegmar

(57) **Zusammenfassung**

Eine Grillpfanne mit einem Pfannenboden weist eine durch eine umlaufende Seitenwand (3) eingeschlossene Gargutseite (1, 2) auf, in der Rillen (6, 6a) ausgeformt sind. Die Gargutseite (1, 2) ist um mindestens eine erste virtuelle Achse (9) um einen ersten spitzen Winkel (α) gegenüber der Ofenseite (5, 5') geneigt. Um den Abfluss von aus dem Gargut austretender Flüssigkeit und Fett zu verbessern, ist die Gargutseite (1, 2) in zwei Gargutseitenhälften (1, 2) unterteilt, die zueinander annähernd V-förmig um eine zweite virtuelle Achse (10), die rechtwinklig zu der ersten virtuellen Achse (9) orientiert ist, jeweils um einen zweiten (β) und einen dritten (γ) spitzen Winkel geneigt sind. Die Rillen (6, 6a) verlaufen in Draufsicht auf die Gargutseite (1, 2) schräg zu der zweiten virtuellen Achse (10) hin.

## Beschreibung

Die Erfindung betrifft eine Grillpfanne nach dem Oberbegriff des Anspruchs 1.

Um Gargut, insbesondere Fleisch, in Geschmack und Konsistenz vorteilhaft zuzubereiten, wird generell aus dem Gargut beim Grillen austretende Flüssigkeit, in der Hauptsache Wasser, aber auch Fett, von dem Gargut entfernt, und zwar aus dem Bereich einer Pfanne, in dem das Gargut aufliegt. Dadurch soll das Gargut bei der Zubereitung möglichst nicht mit dieser Flüssigkeit und sich aus dieser entwickelndem Dampf beaufschlagt werden. Um die Flüssigkeit aus dem Bereich des Garguts schnell und effektiv abzuleiten, gehört es bereits zum Stand der Technik (DE 10 2004 015 511 A1), auf der Gargutseite des Bodens der Grillpfanne bzw. Küchenpfanne Rippen auszubilden, zwischen denen Rillen so geneigt ausgeformt sind, dass sie mit einer Ofenseite des Bodens der Grillpfanne einen spitzen Winkel von etwa 1° einschließen. Die Rillen enden an ihrem unteren Ende in ein muldenförmiges Reservoir. Dabei liegt das Gargut bzw. Grillgut auf der Oberseite der Rippen parallel zu der Ofenseite des Pfannenbodens bzw. zu der Kochstelle auf, d.h. während des Grillens horizontal. Im Einzelnen verlaufen die Rippen und Rillen in einem quadratischen Pfannenboden parallel zueinander und annähernd parallel zu zwei benachbarten Seitenwandabschnitten, die den Pfannenboden einschließen. - Diese Anordnung hat den Nachteil, dass ein Teil der Flüssigkeit und des Fetts, welches über die Rillen abgeführt werden soll, einen weiten Weg durch die Rillen zurückzulegen hat, über denen sich das Gargut befindet, welches demzufolge in unerwünschter Weise mit Dampf beaufschlagt werden kann, der aus der Flüssigkeit in den Rillen austritt. Auch ist bei dem Sammeln der Flüssigkeit bzw. des Fetts in dem muldenförmigen Reservoir dessen Entfernung zu den außen in der Nähe des Rands des Pfannenbodens liegenden Rillen ungünstig groß.

Im Wesentlichen die gleichen Nachteile hat eine andere zum Stand der Technik gehörende Pfanne, deren Pfannenboden zwischen Erhebungen verlaufende Rillen aufweist, welche in wenigstens eine Mulde münden, wobei unter den Rillen jeweils ein Hohlraum oder eine Nut ausgebildet ist und in der Nut Isoliermaterial, insbesondere Keramik, angeordnet sein kann, um den Wärmeübergang von der Ofenseite des Bodens zu den Rillen zu reduzieren (DE 296 05 888 U1). Damit soll eine hohe Erwärmung des Fetts oder des Bratensafts innerhalb der Rille vermieden werden.

Der vorliegenden Erfindung liegt die Aufgabe zugrunde, die Ableitung der aus dem Gargut austretenden Flüssigkeit zu einer Sammelmulde bzw. Sammelwanne hin weiter zu verbessern, so dass Flüssigkeit und Fett rasch abfließen und durch Dampfentwicklung nicht die Qualität des Garguts beeinträchtigen.

Diese Aufgabe wird durch die Kombination der in Anspruch 1 angegebenen Merkmale gelöst.

Erfindungsgemäß ist nicht nur die Gargutseite um eine erste virtuelle Achse um einen ersten spitzen Winkel gegenüber der Ofenseite geneigt, sondern es sind außerdem zwei Gargutseitenhälften, in welche die Gargutseite unterteilt ist, um eine zweite virtuelle Achse, die rechtwinklig zu der ersten virtuellen Achse orientiert ist, jeweils um einen zweiten bzw. einen dritten spitzen Winkel geneigt, und zwar sind nicht nur die Rillen in der Gargutseite, sondern auch die zwischen den Rillen angeordneten Gargutseitenabschnitte derart geneigt. Damit sind die beiden Gargutseiten schwach V-förmig zueinander geneigt und die V-förmige Anordnung der beiden Gargutseiten ist insgesamt um den ersten spitzen Winkel gegenüber der Ofenseite gekippt. In Verbindung mit der Maßnahme, dass die Rillen in der Gargutseite in Draufsicht auf die Gargutseite schräg zu der zweiten virtuellen Achse hin verlaufen, wird erreicht, dass die Rillen verhältnismäßig kurz sind, so dass die beim Grillen aus dem Gargut heraustretende Flüssigkeit und Fett wirksam unter dem Grillgut abgeführt wird. Diese Ausbildung eignet sich besonders für eine größere Grillpfanne, in der gleichzeitig mindestens zwei Stücke Gargut, insbesondere Steaks, gleichzeitig gegrillt werden können, wobei je ein Stück auf einer Gargutseitenhälfte liegt. Zum guten Abführen des Wassers bzw. Fetts von dem Gargut ist dabei vorteilhaft, dass nicht nur die Rillen in der Gargutseite, sondern auch die zwischen den Rillen angeordneten Gargutseitenabschnitte in der oben definierten Weise zweifach geneigt sind.

Indem nach Anspruch 2 die Rillen bevorzugt in einer zentralen Sammelrille münden, die entlang der zweiten virtuellen Achse zwischen den beiden Garguthälften ausgeformt ist, wird sichergestellt, dass die Flüssigkeit und das Fett, das aus dem Grillgut ausgetreten ist, von den beiden Garguthälften rasch weiter durch die zentrale Sammelrinne zu einer vertieften Sammelwanne an einem tiefen äußeren Ende der Sammelrinne abfließt und aus der Sammelwanne beispielsweise leicht abgeschöpft werden kann.

Zweckmäßig sind die Rillen, die in den beiden Gargutseitenhälften nach Anspruch 3 ausgeformt sind, bis zu 1 mm tief. Es hat sich gezeigt, dass diese Vertiefung zur sicheren Ableitung der Flüssigkeit und des Fetts aus dem Gargut ausreicht. Andererseits sind die Unterschiede der Materialdicke in der Rinne zu den benachbarten Abschnitten der Gargutseitenhälften nicht zu groß, um erhebliche Temperaturerhöhungen in den Rillen gegenüber den benachbarten Abschnitten zu vermeiden, die eine erhöhte Verdampfung hervorrufen.

Im Hinblick auf die unterschiedliche Dicke des Materials zwischen der in Gebrauchslage waagerechten Ofenseite des Pfannenbodens und den zweifach geneigten Gargutseitenhälften, die eine ungleichmäßige Erhitzung des Garguts hervorrufen könnte, wird gemäß Anspruch 4 vorgeschlagen, dass der Pfannenboden aus Material besteht, dessen spezifische Wärmeleitfähigkeit im Wesentlichen proportional zu der örtlichen Dicke des Pfannenbodens ist.

Eine Annäherung an die obige örtlich variable spezifische Wärmeleitfähigkeit des Materials, aus dem der Pfannenboden gefertigt ist, besteht darin, dass in einen Pfannenbodenkörper aus unter Fertigungsgesichtspunkten ausgewähltem Material, beispielsweise Aluminium, eine Sandwichplatte aus einem Material eingesetzt ist, welches im Vergleich zu Aluminium eine erhöhte spezifische Wärmeleitfähigkeit aufweist, beispielsweise Kupfer.

Wie voranstehend erwähnt kann gemäß Anspruch 5 die Grillpfanne fertigungsgünstig im Wesentlichen aus Aluminium gegossen sein.

Weiterhin fertigungsgünstig ist die zu der zweiten virtuellen Achse zwischen den beiden Gargutseitenhälften symmetrische Ausbildung des Pfannenbodens gemäß Anspruch 6, die beinhaltet, dass der zweite spitze Winkel der Neigung der ersten der beiden Garguthälften und der dritte spitze Winkel der Neigung der zweiten der beiden Garguthälften gleichgroß sind.

Gemäß Anspruch 7 sind die Winkel bevorzugt so dimensioniert, dass der zweite spitze Winkel der Neigung und der dritte spitze Winkel der Neigung der beiden Garguthälften 0,5 bis 5° beträgt.

Nach Anspruch 8 kann die Neigung des ersten spitzen Winkels der Gargutseite insgesamt größer sein, nämlich 5 bis 10° betragen. Infolge der in den beiden Garguthälften schräg verlaufenden Rillen wird dabei ein Abrutschen des Grillguts sicher vermieden.

Zwei Ausführungsbeispiele der Erfindung werden nachfolgend anhand einer Zeichnung mit fünf Figuren beschrieben, woraus sich die vorteilhaften Merkmale der Erfindung im Einzelnen ergeben. Es zeigen:
- Figur 1: eine Draufsicht auf eine Grillpfanne der ersten Ausführungsform und der zweiten Ausführungsform, und zwar auf eine Gargutseite des Pfannenbodens der Grillpfanne,
- Figur 2: einen Schnitt durch die Schnittebene A-A in Figur 1 durch die erste Ausführungsform,
- Figur 3: einen Schnitt durch die Schnittebenen A-A in Figur 1 durch die zweite Ausführungsform,
- Figur 4: einen Schnitt durch die Schnittebene B-B in den Figuren 1 und 3 durch die zweite Ausführungsform und
- Figur 4a: eine schematische Darstellung des zweiten Winkels und des dritten Winkels, um die die Gargutseitenhälften der zweiten Ausführungsform geneigt sind, in zur Verdeutlichung übertriebener Darstellung.

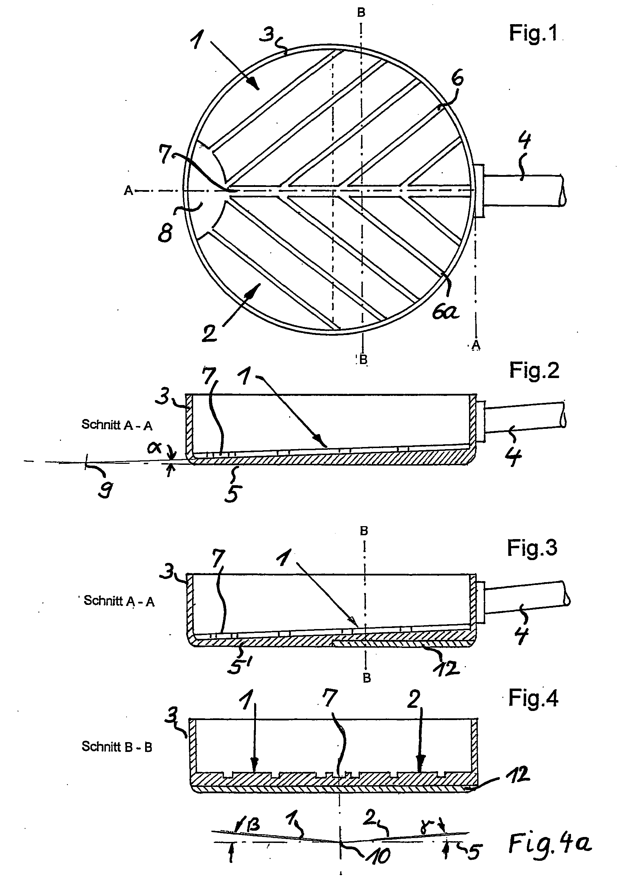

In Figur 1 sind zwei Gargutseitenhälften eines Pfannenbodens, die in der Gebrauchslage der Grillpfanne von oben dargestellt sind, mit 1 und 2 bezeichnet. Die beiden Gargutseiten 1 und 2 des Pfannenbodens sind durch eine kreisringförmige umlaufende Seitenwand 3 eingeschlossen. An einer Außenseite der Seitenwand 4 ist ein thermisch isolierter Handgriff 4 angeordnet.

Die in Gebrauchslage der Grillpfanne horizontale Ofenseite der Grillpfanne ist in Figur 2 mit 5 bezeichnet und in den Figuren 3 und 4 mit 5'.

Aus den beiden Gargutseiten 1 und 2 sind, wie aus Figur 1 ersichtlich, vertiefte Rillen, z.B. 6, 6a so ausgeformt, dass sie schräg und in jeweils einer der beiden Garguthälften parallel zueinander zu einer zentralen Sammelablaufrinne 7 zwischen den beiden Gargutseiten 1 und 2 verlaufen. Die Sammelablaufrinne 7 mündet an ihrem zu dem Handgriff 4 entgegengesetzten Ende in eine Sammelwanne 8, die tiefer in dem Pfannenboden ausgeformt ist als die Sammelablaufrinne 7. Die Sammelwanne 8 hat eine in Draufsicht kreissegmentförmige Form, die ein Ausschöpfen der sich in der Sammelwanne 8 ansammelnden Flüssigkeit und des Fetts erleichtert.

Wie aus Figur 2 ersichtlich ist die Gargutseite, hier die erste Gargutseitenhälfte 1, ebenso wie die Sammelablaufrinne 7 gegenüber der Ofenseite 5 um eine erste virtuelle Achse 9 um einen spitzen Winkel α geneigt.

Außerdem sind die beiden Gargutseitenhälften 1 und 2 um eine zweite virtuelle Achse 10 geneigt, und zwar, wie in Figur 4a dargestellt, die erste Gargutseitenhälfte 1 um einen zweiten Winkel β und dazu entgegengesetzt die zweite Gargutseitenhälfte 2 um einen dritten spitzen Winkel γ, wobei der zweite Winkel β und der dritte Winkel γ gleich groß sind. Damit verlaufen die beiden Gargutseitenhälften 1 und 2 zueinander schwach V-förmig, zusätzlich zu der Neigung um den Winkel α um die erste virtuelle Achse 9 gemäß Figur 2. Die schwach V-förmige Neigung der beiden Gargutseiten 1 und 2 ist aus Figur 4 nicht ersichtlich, da der zweite Winkel β und der dritte Winkel γ kleiner als der erste Winkel α sind. Die Darstellung des zweiten spitzen Winkels β und des dritten spitzen Winkels γ in Figur 4a ist stark überhöht, um deren Verlauf zu zeigen.

Zweckmäßig kann der erste Winkel 8° betragen und die zweiten und dritten Winkel jeweils 2°.

Der Pfannenboden mit den beiden Gargutseitenhälften 1 und 2 sowie der Seitenwand 3 ist zweckmäßig aus Aluminium gegossen.

Um in dem verhältnismäßig dicken Abschnitt des Pfannenbodens, der in Figur 1 etwa zwischen der Mittellinie 11 und dem Griff 4 liegt, und dem seitlich neben diesem Abschnitt liegenden dünneren Abschnitt bei Gebrauch der Grillpfanne keine großen Temperaturunterschiede aufkommen zu lassen, die ein ungleichmäßiges Garen bzw. Grillen zur Folge haben könnten, ist in den Pfannenboden der zweiten Ausführungsform gemäß Figuren 3 und 4 unten eine Kupferplatte 12 eingelassen, welche die Wärme von der Ofenseite besser zu den beiden Gargutseitenhälften 1 und 2 leitet als der seitlich neben diesem Abschnitt angeordnete Abschnitt des Pfannenbodens aus Aluminium.

Beim Grillen wird vorzugsweise je ein Steak auf die erste Gargutseitenhälfte 1 und auf die zweite Gargutseitenhälfte 2 gelegt. Die bei dem Grillen der Steaks ausströmende Flüssigkeit und das austretende Fett werden auf jeweils kurzen Wegen durch die Rillen 6, 6a zu der Sammelablaufrinne 7 und von letzterer in die Sammelwanne 8 geleitet.

Damit wird das Gargut, insbesondere Fleisch, rasch gar und geschmacklich besonders gut zubereitet. Die Grillpfanne zeichnet sich dabei durch einen geringen Wärmeenergiebedarf aus, da das Gargut rasch auf den gewünschten Garpunkt gebracht werden kann.

### Bezugszahlenliste

- 1: erste Gargutseitenhälfte
- 2: zweite Gargutseitenhälfte
- 3: Seitenwand
- 4: Handgriff
- 5, 5': Ofenseite
- 6, 6a: Rillen
- 7: Sammelablaufrinne
- 8: Sammelwanne
- 9: erste virtuelle Achse
- 10: zweite virtuelle Achse
- 11: Mittellinie
- 12: Kupferplatte

## Patentansprüche

1. Grillpfanne mit einem Pfannenboden, der eine durch eine umlaufende Seitenwand (3) eingeschlossene Gargutseite (1, 2) sowie eine Ofenseite (5, 5') aufweist, wobei in der Gargutseite (1, 2) Rillen (6, 6a) ausgeformt sind und wobei die Gargutseite (1, 2) um mindestens eine erste virtuelle Achse (9) um einen ersten spitzen Winkel (α) gegenüber der Ofenseite (5, 5') geneigt ist,
**dadurch gekennzeichnet,**
**dass** die Gargutseite (1, 2) in zwei Gargutseitenhälften (1, 2) unterteilt ist, die zueinander annähernd V-förmig um eine zweite virtuelle Achse (10), die rechtwinklig zu der ersten virtuellen Achse (9) orientiert ist, jeweils um einen zweiten (β) und einen dritten (γ) spitzen Winkel geneigt sind, und
**dass** die Rillen (6, 6a) in Draufsicht auf die Gargutseite (1, 2) schräg zu der zweiten virtuellen Achse (10) hin verlaufen.

2. Grillpfanne nach Anspruch 1,
**dadurch gekennzeichnet,**
**dass** die Rillen (6, 6a) in einer zentralen Sammelrinne (7) münden, die entlang der zweiten virtuellen Achse (10) zwischen den beiden Gargutseitenhälften (1, 2) ausgeformt ist.

3. Grillpfanne nach Anspruch 1 oder 2,
**dadurch gekennzeichnet,**
**dass** die Rillen (6, 6a) bis zu 1 mm tief sind.

4. Grillpfanne nach einem der Ansprüche 1 - 3
**dadurch gekennzeichnet,**
**dass** der Pfannenboden aus mindestens einem Material besteht, dessen spezifische Wärmeleitfähigkeit im wesentlichen proportional zu der örtlichen Dicke des Pfannenbodens ist.

5. Grillpfanne nach einem der vorangehenden Ansprüche,
**dadurch gekennzeichnet,**
**dass** sie im wesentlichen aus Aluminium gegossen ist.

6. Grillpfanne nach einem der vorangehenden Ansprüche,
**dadurch gekennzeichnet,**
**dass** der zweite spitze Winkel (β) der Neigung der ersten der beiden Garguthälften (1) und der dritte spitze Winkel (γ) der Neigung der zweiten der beiden Garguthälften (2) gleich groß sind.

7. Grillpfanne nach einem der vorangehenden Ansprüche,
**dadurch gekennzeichnet,**
**dass** der zweite spitze Winkel (β) der Neigung und der dritte spitze Winkel (γ) der Neigung der beiden Garguthälften 0,5 - 5° betragen.

8. Grillpfanne nach einem der vorangehenden Ansprüche,
**dadurch gekennzeichnet,**
**dass** der erste spitze Winkel (α) der Neigung der Gargutseite (1, 2) 5 - 10° beträgt.
